# EUROPÄISCHE PATENTSCHRIFT

(11) **EP 1 204 917 B1**
(45) Veröffentlichungstag und Bekanntmachung des Hinweises auf die Patenterteilung: **26.03.2003**
(21) Anmeldenummer: 00956195.2
(22) Anmeldetag: 17.07.2000
(51) Int. Cl.: G06F 7/00, G06F 5/06

(54) **OPERANDENSTAPELSPEICHER UND VERFAHREN ZUM BETREIBEN EINES OPERANDENSTAPELSPEICHERS**
STACK OF OPERANDS AND METHOD FOR STACKING OF OPERANDS
PILE D'OPERANDES ET PROCEDE DE MISE EN OEUVRE D'UNE PILE D'OPERANDE

(30) Priorität: 19.07.1999 DE 19933130
(43) Veröffentlichungstag der Anmeldung: 15.05.2002
(73) Patentinhaber: Giesecke & Devrient GmbH, 81677 München (DE)
(72) Erfinder: MERCK, Martin, D-81243 München (DE)
(74) Vertreter: Klunker . Schmitt-Nilson . Hirsch
(86) Internationale Anmeldenummer: EP0006833
(87) Internationale Veröffentlichungsnummer: WO01006347

(56) Entgegenhaltungen:
- WO-A-98/21647
- WO-A-98/36536
- "STORING VARIABLE LENGTH DATA IN A CIRCULAR BUFFER" IBM TECHNICAL DISCLOSURE BULLETIN,US,IBM CORP. NEW YORK, Bd. 36, Nr. 3, 1. März 1993 (1993-03-01), Seiten 491-493, XP000354850 ISSN: 0018-8689
- PATENT ABSTRACTS OF JAPAN vol. 1995, no. 10, 30. November 1995 (1995-11-30) & JP 07 193511 A (NEC CORP;OTHERS: 01), 28. Juli 1995 (1995-07-28)

## Beschreibung

In einer Rechenmaschine, sei es eine Hardware-Rechenmaschine oder eine virtuelle Rechenmaschine, erfolgt die Verarbeitung von Operanden in einer zentralen Recheneinheit. Die verarbeiteten Operanden werden in einem Operandenspeicher abgespeichert, die zu verarbeitenden Operanden werden aus dem Operandenspeicher ausgelesen.

Zum Abspeichern der Operanden ist die Verwendung eines Stapelspeichers (Stack) üblich. Organisiert wird ein solcher Operandenstapelspeicher (vereinfacht: Operandenstapel) in der Weise, daß ein Speicherplatz gegebener Größe für eine bestimmte Menge von Stapelelementen des Operandenstapels freigehalten wird, wobei in diesem Speicherbereich die Stapelelemente konstanter Länge eingerichtet werden. Ein Stapel-Zeiger (Pointer), beispielsweise als Zähler ausgebildet, wird bei jedem Speicherzugriff erhöht oder erniedrigt.

Zum besseren Verständnis der Erfindung sei auf Fig. 5 der Zeichnung verwiesen, die schematisch einen zum Stand der Technik gehörigen Operandenstapel 100 zeigt. Der Operandenstapel 100 enthält Stapelelemente 100a, 100b,... jeweils konstanter Länge. Diese konstante Länge, Lmax, bestimmt sich durch den längsten zu speichernden Operanden. Im dargestellten Beispiel ist in dem "untersten" Stapelelement 100a ein Referenz-Wert gespeichert. Der zweite Operand in dem Stapelelement 100b ist ein Byte-Wert, genauso wie der Operand in dem dritten Stapelelement 100c. In dem vierten Stapelelement befindet sich eine ganze Zahl, hier als Integer bezeichnet. In dem fünften und dem sechsten Stapelelement sind als Operanden ein Short-Wert bzw. ein Byte-Wert gespeichert.

Im vorliegenden Beispiel sind die längsten vorkommenden Operanden "Referenz" im ersten Stapelelement und "Integer" im vierten Stapelelement. Jedes Stapelelement 100a, 100b,... belegt einen Speicherplatz der Länge Lmax. Jedes Stapelelement 100a, 100b,... der Länge Lmax nimmt einen Speicherplatz ein, der in dem hier betrachteten Beispiel vier adressierbare Speicherstellen umfassen soll. Wird ein weiterer Operand auf den Operandenstapel 100 gelegt, so wird der Inhalt eines Stapel-Zeigers 101 um "4" erhöht, so daß er auf das nächste freie Stapelelement zeigt. Nach dem Lesen eines Operanden wird der Inhalt des Stapel-Zeigers um "4" verringert.

Der Nachteil der Stapelelemente einheitlicher Größe, das heißt im vorliegenden Beispiel der Stapelelemente mit jeweils vier kleinsten adressierbaren Speicherstellen, besteht in der erheblichen Platzverschwendung bei der Abspeicherung von relativ kurzen Operanden. Im vorliegenden Beispiel sind nur die Operanden in den Stapelelementen "1" und "4" Operanden mit der maximalen Länge Lmax, die übrigen Operanden in den Stapelelementen "2", "3" und "6" (Byte-Werte) sind die kürzesten Operanden und belegen nicht einmal die Hälfte des verfügbaren Speicherplatzes der Länge Lmax. Der Short-Wert bei "5" belegt nur die Hälfte des verfügbaren Platzes in dem Stapelelement.

Bei der Verarbeitung der in dem Operandenstapel 100 abgespeicherten Operanden möchte man sicher sein, daß die in dem Operandenstapel abgespeicherten Operanden tatsächlich dem programmgemäßen Operanden-Typ entsprechen. Eine laufende Typüberprüfung ist aber bei der in Fig. 5 skizzierten Organisation des Operandenstapels nicht möglich. Möglich ist eine Überprüfung mit Hilfe eines Verifikationsprozesses, dieser bedingt jedoch eine vollständige Datenflußanalyse, die einen erheblichen Aufwand darstellt.

Aus "Storing Variable Length Data in a Circular Buffer", IBM Technical Dilclosure Bulletin, IBM Corp. New York, Bd. 36, Nr. 3, 1. März 1993, Seiten 491 - 493, ist es zudem bekannt, Daten variabler Länge unter zusätzlicher Verwendung eines Feldes fester Länge abzuspeichern, wobei im Feld fester Länge Informationen darüber abgespeichert werden, welche Länge die eigentlich zu speichernden Daten variabler Länge aufweisen. Somit ist es möglich, die Daten variabler Länge platzsparend abzuspeichern.

Der Erfindung liegt die Aufgabe zugrunde, einen Operandenstapelspeicher der im unabhängigen Anspruch 1 definiert ist anzugeben, bei dem der Speicherplatzbedarf optimiert ist und ferner eine laufende Typüberprüfung möglich ist. Außerdem soll ein Verfahren gemäß unabhängigen Anspruch 8 zum Betreiben eines Operandenspeichers angegeben werden, welches den Speicherbedarf für den Operandenstapel optimiert und eine laufende Typüberprüfung gestattet.

Weitere Ausführungsformen sind in den abhängigen Ansprüche spezifiziert.

Zur Lösung dieser Aufgabe sieht die Erfindung einen Operandenstapelspeicher vor, dem ein Typenspeicher zugeordnet ist, wobei in dem Typenspeicher für jeden einzelnen abgespeicherten Operanden die dazugehörige Typinformation gespeichert ist, welche Längen-Information über diesen Operanden enthält. Mit Hilfe dieser Information wird bei der Abspeicherung der unterschiedlich langen Operanden kein Speicherplatz mehr verschwendet, sondern in dem Operandenstapel ist die Information dicht an dicht gespeichert. Der erfindungsgemäße Operandenstapelspeicher weist zwei grundlegende Organisationsformen auf: in einer ersten Form ist der Typenspeicher als von dem Operandenspeicher getrennter Stapelspeicher mit Stapelelementen konstanter Länge ausgebildet. In einer alternativen Version ist der Typenspeicher in den Operandenspeicher integriert, das heißt, jeder Operand, der eine aus einer vorbestimmten Anzahl gegebener Längen aufweisen kann, hängt direkt zusammen mit der dazugehörigen Typ-Information.

Da die zu jedem Operanden verfügbare Typinformation Längen-Information über den Operanden enthält, steht von vornherein fest, wieviel Speicherplatz der jeweilige Operand benötigt. Beim Einschreiben in den Operandenspeicher, das heißt dann, wenn ein neuer Operand auf den Operandenstapel gelegt wird, wird in Verbindung mit diesem Operanden die Typ-Information gespeichert. Beim Lesen des Operanden wird dann zunächst die Typ-Information ausgewertet, und dementsprechend kann der Stapel-Zeiger so eingestellt werden, daß die entsprechende Anzahl von Speicherzellen für den Operanden ausgelesen wird. Die Typ-Information ist binär kodiert, beispielsweise als vierstelliger Code, der für jeden vorkommenden Operandentyp eindeutig ist. Aus diesem Code läßt sich mit Hilfe einer Tabelle die dazugehörige Längeninformation gewinnen.

Die in Verbindung mit jedem einzelnen Operanden abgespeicherte Typ-Information ermöglicht ein laufendes Überprüfen des Operandentyps während der Verarbeitung der Operanden. Bevor ein Operand aus dem Operandenstapel ausgelesen wird, wird die Typ-Information gelesen, um den Operanden mit der entsprechenden Anzahl von Speicherstellen auszulesen. Die damit verfügbare Typ-Information kann mit Soll-Information eines Prüfprogramms verglichen werden. Fällt der Vergleich negativ aus, das heißt stimmt der anstehende Operanden-Typ nicht mit dem programmgemäß erwarteten Operanden-Typ überein, erfolgt eine Fehlerbehandlung.

Durch die Erfindung wird also einerseits eine Speicherplatzoptimierung erreicht, andererseits wird Information zur Verfügung gestellt, die ein laufendes Überprüfen des Operandentyps gestattet.

Der erfindungsgemäße Operandenstapelspeicher und das erfindungsgemäße Verfahren zum Betreiben eines Operandenstapelspeichers sind einsetzbar in Verbindung mit einer Hardware-Rechenmaschine, aber auch in Verbindung mit einer virtuellen Rechenmaschine. Die oben erwähnten Vorteile werden in beiden Fällen erreicht.

Im folgenden werden Ausführungsbeispiele der Erfindung anhand der Zeichnung näher erläutert. Es zeigen:
- Fig. 1: eine schematische Darstellung eines Operandenstapelspeichers in Verbindung mit einem Typenspeicher;
- Fig. 2: ein schematisches Flußdiagramm zum Veranschaulichen des Betriebs bei einem Speichervorgang eines Operanden;
- Fig. 3: ein Flußdiagramm zum Veranschaulichen des Betriebs beim Lesen eines Operanden von einem Operandenstapel, wobei eine Typüberprüfung des Operanden stattfindet;
- Fig. 4: eine schematisierte Darstellung einer zu der Ausführungsform nach Fig. 1 alternativen Ausführungsform eines Operandenstapelspeichers; und
- Fig. 5: eine schematische Darstellung eines zum Stand der Technik gehörigen Operandenstapelspeichers.

Wie oben in Verbindung mit Fig. 5 ausgeführt wurde, sind im Stand der Technik in dem Operandenstapelspeicher 100 Stapelelemente 100a, 100b,... jeweils konstanter Länge Lmax vorgesehen, so daß bei kürzeren Operanden durch den dann nicht genutzten Speicherplatz eine beträchtliche Menge an Speicherplatz verloren geht. Diese verloren gegangene Menge Speicherplatz ist in Fig. 5 schraffiert angedeutet.

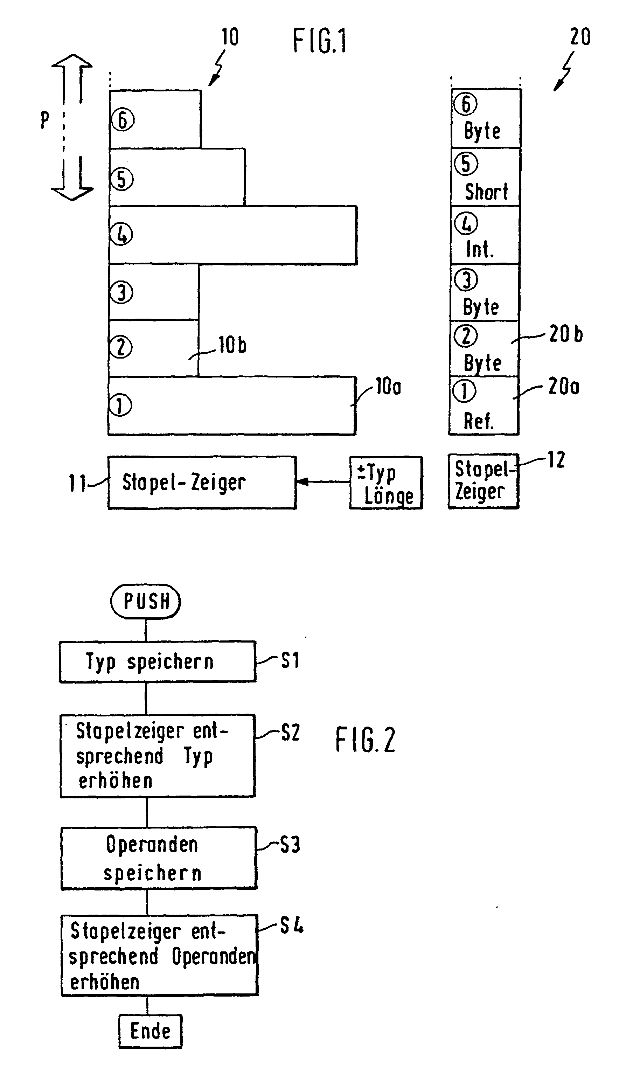

Fig. 1 zeigt schematisch eine erste Ausführungsform eines Operandenstapelspeichers gemäß der Erfindung, wobei das Verfahren zum Organisieren dieses Operandenstapelspeichers ebenfalls ersichtlich ist.

Wie durch die Darstellung auf der linken Seite in Fig. 1 angedeutet ist, sind die einzelnen Stapelelemente 10a, 10b,... des Operandenstapelspeichers 10 gerade so lang wie der darin zu speichernde Operand. Die Längeninformation für jeden Operanden befindet sich in einem separaten Typenspeicher 20, der ebenfalls als Stapelspeicher organisiert ist. Die Stapelelemente 20a, 20b des Typenspeichers 20 haben durchgehend konstante Länge. Jedes Stapelelement 20a, 20b,.... des Typenspeichers 20 speichert einen vier Bits umfassenden Code, der den Typ des zugehörigen Operanden eindeutig kennzeichnet. So kennzeichnet die Typ-Information für den Operanden "1" in dem Stapelelement 20a einen Referenz-Wert. Die Typ-Information legt eindeutig auch die jeweilige Länge des Operanden fest. Unten in Fig. 1 ist für den Typenspeicher 20 der dazugehörige Stapel-Zeiger 12 angedeutet. Für den Lese- und Schreibbetrieb des Typenspeichers 20 wird der Stapel-Zeiger 12 erhöht bzw. erniedrigt. Der Wert des Stapel-Zeigers 12 entspricht jeweils der Adresse des nächsten freien Speicherplatzes

Ein Stapel-Zeiger 11 für den Operandenspeicher 10 wird nicht mit jeweils einem konstanten Wert erhöht oder erniedrigt, sondern jeweils entsprechend der Länge des Operanden. Hierzu wird ein Wert entsprechend der Länge des Operanden auf den Stapel-Zeiger 11 addiert, wenn ein Operand auf den Operandenstapel 10 gelegt wird, der Inhalt des Stapel-Zeigers 11 wird um die Länge des Operanden verringert, wenn dieser Operand aus dem Operandenspeicher 10 ausgelesen wird. Der Wert des Stapel-Zeigers 11 entspricht jeweils der Adresse des nächsten freien Speicherplatzes. Beim Betrieb der Rechenmaschine verringert und erhöht sich die Höhe des Operandenstapels 10 laufend entsprechend den einzelnen Lese- und Schreibvorgängen.

Der Fachmann sieht, daß der Operandenstapelspeicher 10 Stapelelemente 10a, 10b,.... veränderlicher Länge aufweist, die in den verfügbaren Speicherraum lückenlos aneinander anschließen. Der Typenspeicher 20 ist an einer anderen Stelle des Speichers angelegt.

Fig. 2 erläutert in Form eines Flußdiagramms einen Schreibvorgang, mit dem ein Operand auf den Operandenstapelspeicher 10 gelegt wird. Im Schritt S1 wird der zu speichernde Operanden-Typ in den Typspeicher 20 gespeichert, im Schritt S2 wird der Stapel-Zeiger 12 erhöht. In Schritt S3 wird der Operand auf den Operandenstapel 10 abgelegt und in Schritt S4 wird, entsprechend dem auf den Operandenstapel 10 abgelegten Typ, der Stapel-Zeiger 11 des Operandenstpels erhöht, das heißt entsprechend der Länge des Operanden die aus der Typinformation bekannt ist. Wie oben beschrieben, zeigen die Stapel-Zeiger 11 und 12 danach auf den jeweils nächsten freien Speicherplatz.

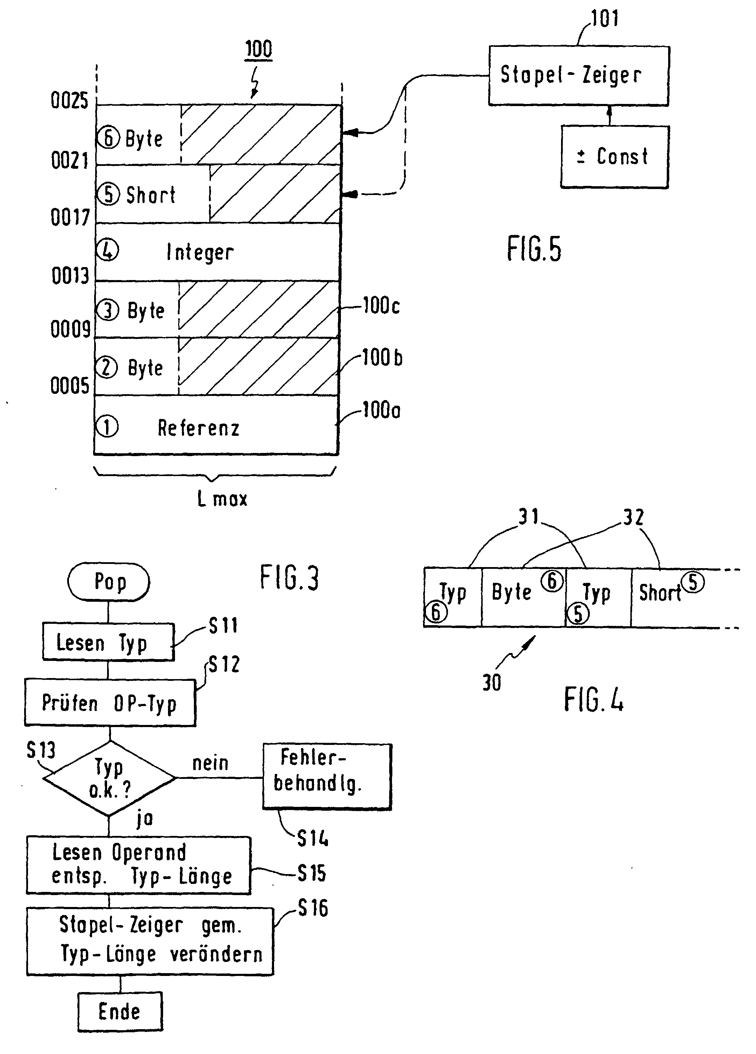

Fig. 3 zeigt schematisch den Ablauf bei einem Lesevorgang, Im Schritt S11 wird aus dem Typenspeicher 20 das oberste Element des Stapels gelesen. Dazu wird der Wert des Stapel-Zeigers 12 um die Länge eines Stapelelements, im Beispiel vier Bit, verringert, da - wie oben beschrieben - der Stapel-Zeiger 12 auf die Anfangsadresse des nächsten freien Stapelelements zeigt. Der Wert des verringerten Stapel-Zeigers 12 bildet somit die Anfangsadresse zum Auslesen des obersten Elements im Typspeicher 20. Im vorliegenden Beispiel wird die Information aus dem Typspeicher 20 gelesen, daß es sich bei dem Operanden um einen Byte-Wert handelt.

Im Schritt S12 erfolgt eine Prüfung des Operanden-Typs. Die Prüfung ist nicht Gegenstand der Erfindung und soll hier nicht näher erläutert werden.

Im Schritt S13 wird abgefragt, ob der Typ der erwartete Operanden-Typ ist. Falls nicht, erfolgt in einem Schritt S14 eine Fehlerbehandlung.

Entspricht der Operanden-Typ dem erwarteten Typ, so wird der entsprechende Operand im Schritt S15 gelesen, das heißt es wird von dem Operandenstapelspeicher 10 in Fig. 1 aus dem obersten Stapelelement der Operand mit der Länge entsprechend dem Byte-Wert abgenommen. Dazu wird der Wert des Stapel-Zeigers 11 um die Länge des Operanden, im vorliegenden Beispiel also um die Länge des Byte-Werts, verringert. Der Wert des Stapel-Zeigers 11 bildet somit die Anfangsadresse des zu lesenden obersten Elements des Operandenstapelspeichers 10. Der Wert des Stapel-Zeigers 11 entspricht somit nach dem Lesen wieder der Adresse der nächsten freien Speicherzelle.

In Fig. 4 ist eine zu Fig. 1 alternative Organisation des Operandenstapelspeichers dargestellt. Der Operandenstapelspeicher 30 enthält Typenspeicherelemente 31 jeweils konstanter Länge und Operandenspeicherelemente 32, deren Länge jeweils von dem Typ abhängt. Der Operandenstapelspeicher 30 in Fig. 4 läßt sich ebenfalls gemäß dem Ablauf nach Fig. 2 und Fig. 3 betreiben, wobei die jüngsten Operanden in Fig. 4 rechts dargestellt sind, während in Fig. 1 die jüngsten Operanden oben auf dem Stapel liegen.

## Patentansprüche

1. Operandenstapelspeicher für eine Rechenmaschine, die eine Recheneinheit, die einzelne Operanden gemäß einem Programm verarbeitet, und den Operandenstapelspeicher, in welchem Operanden verschiedener Längen als Stapel gespeichert sind, enthält, **gekennzeichnet durch** einen Typenspeicher (20, 31) mit Speicherelementen konstanter Länge, der für jeden in dem Operandenspeicher (10, 32) gespeicherten Operanden dessen Typ-Information speichert, welche Information über die Länge des betreffenden Operanden enthält, wobei die Länge des jeweiligen Operandentyps abhängig von dem zugehörigen Typ-Code in einer Tabelle gespeichert ist.

2. Operandenstapelspeicher nach Anspruch 1, **dadurch gekennzeichnet, daß** der Typenspeicher (20) als von dem Operandenspeicher getrennter Stapelspeicher mit Stapelelementen konstanter Länge ausgebildet ist.

3. Operandenstapelspeicher nach Anspruch 1, **dadurch gekennzeichnet, daß** der Typenspeicher (31) in den Operandenspeicher operandenweise integriert ist.

4. Operandenstapelspeicher nach einem der Ansprüche 1 bis 3, **dadurch gekennzeichnet, daß** der Operandenstapelspeicher als virtueller Stapelspeicher für eine virtuelle Rechenmaschine ausgebildet ist.

5. Operandenstapelspeicher nach einem der Ansprüche 1 bis 4, **gekennzeichnet durch** eine Operandentyp-Prüfeinrichtung (S12-S14), die bei jedem Lesezugriff auf den Operandenspeicher (10, 32) aktiviert wird.

6. Rechenmaschine mit einem Operandenstapelspeicher nach einem der Ansprüche 1 bis 5.

7. Chipkarte mit einer integrierten virtuellen Rechenmaschine nach einem der Ansprüche 1 bis 6.

8. Verfahren zum Betreiben eines Operandenstapelspeichers in einer Rechenmaschine, bei dem die Stapelelemente des Operandenstapelspeichers zum Speichern von Operanden unterschiedlicher Länge dienen, **dadurch gekennzeichnet, daß** für jeden Operanden in dem Operandenstapelspeicher (10, 32) ein Typenspeicherelement (20a, 20b; 31) einheitlicher Länge angelegt wird, daß die in einem Typenspeicherelement gespeicherte Typ-Information Längen-Information über die Länge des zugehörigen Operanden enthält, und daß diese Längen-Information bei jedem Zugriff auf den Operandenspeicher ausgewertet wird, wobei die Länge des jeweiligen Operandentyps abhängig von dem zugehörigen Typ-Code in einer Tabelle gespeichert ist.

9. Verfahren nach Anspruch 8, **dadurch gekennzeichnet, daß** die Typenspeicherelemente in Form eines separaten Stapelspeichers (20) angelegt werden.

10. Verfahren nach Anspruch 8, **dadurch gekennzeichnet, daß** die Typenspeicherelemente (31) mit dem zugehörigen Operandenspeicher-Stapelelement (32) zusammenhängend abgespeichert werden.

11. Verfahren nach einem der Ansprüche 8 bis 10, **dadurch gekennzeichnet, daß** bei jedem Lesezugriff auf den Operandenspeicher (10, 32) eine Typüberprüfung durchgeführt wird.

## Claims

1. An operand stack for a calculating machine containing a processing unit processing individual operands according to a program, and the operand stack in which operands of different lengths are stored as a stack, **characterized by** a type memory (20, 31) with memory elements of constant length which stores for each operand stored in the operand memory (10, 32) its type information which contains information about the length of the relevant operand, the length of the particular operand type being stored in a table in dependence on the corresponding type code.

2. An operand stack according to claim 1, **characterized in that** the type memory (20) is formed as a stack with constant length stack elements separate from the operand memory.

3. An operand stack according to claim 1, **characterized in that** the type memory (31) is integrated operand by operand into the operand memory.

4. An operand stack according to any of claims 1 to 3, **characterized in that** the operand stack is formed as a virtual stack for a virtual calculating machine.

5. An operand stack according to any of claims 1 to 4, **characterized by** an operand type checking device (*S*12-*S*14) which is activated at each read access to the operand memory (10, 32).

6. A calculating machine having an operand stack according to any of claims 1 to 5.

7. A smart card having an integrated virtual calculating machine according to any of claims 1 to 6.

8. A method for operating an operand stack in a calculating machine wherein the stack elements of the operand stack are used for storing operands of different length, **characterized in that** a type memory element (20*a*, 20*b*; 31) of uniform length is created for each operand in the operand stack (10, 32), the type information stored in a type memory element contains length information about the length of the corresponding operand, and said length information is evaluated at each access to the operand memory, the length of the particular operand type being stored in a table in dependence on the corresponding type code.

9. A method according to claim 8, **characterized in that** the type memory elements are created in the form of a separate stack (20).

10. A method according to claim 8, **characterized in that** the type memory elements (31) are stored contiguously with the corresponding operand memory stack element (32).

11. A method according to any of claims 8 to 10, **characterized in that** a type check is performed at each read access to the operand memory (10, 32).

## Revendications

1. Mémoire de pile d'opérandes pour une machine à calculer, comprenant une unité de calcul laquelle traite des opérandes individuels selon un programme et la mémoire de pile d'opérandes dans laquelle des opérandes de longueurs différentes sont enregistrés sous la forme de piles, ladite mémoire étant **caractérisée par** une mémoire des types (20, 31), dont les éléments de mémoire sont de longueur constante, qui enregistre pour chaque opérande enregistré dans la mémoire des opérandes (10, 32) les informations relatives au type, dont l'information de la longueur de l'opérande concerné, la longueur des types d'opérandes respectifs étant enregistrée dans une table en fonction du code-type correspondant.

2. Mémoire de pile d'opérandes selon la revendication 1, **caractérisée en ce que** la mémoire des types (20) soit sous la forme de mémoire de pile distincte de la mémoire d'opérandes à éléments de pile de longueur constante.

3. Mémoire de pile d'opérandes selon la revendication 1, **caractérisée en ce que** la mémoire des types (31) soit intégrée dans la mémoire d'opérandes à la manière d'un opérande.

4. Mémoire de pile d'opérandes selon une des revendications 1 à 3, **caractérisée en ce que** la mémoire de pile d'opérandes soit conçue en tant que mémoire de pile virtuelle pour une machine à calculer virtuelle.

5. Mémoire de pile d'opérandes selon une des revendications 1 à 4, **caractérisée par** un dispositif de vérification du type d'opérande (S12-S14) lequel est activé lors de chaque accès lecture à la mémoire d'opérande (10, 32).

6. Machine à calculer avec une pile d'opérandes selon une des revendications 1 à 5.

7. Carte à puce avec une machine à calculer virtuelle intégrée selon une des revendications 1 à 6.

8. Procédé pour l'exploitation d'une mémoire de pile d'opérandes dans une machine à calculer, dans lequel les éléments de pile de la mémoire de pile d'opérandes servent à enregistrer des opérandes de diverses longueurs, **caractérisé en ce que** pour chaque opérande de la mémoire de pile d'opérandes (10, 32) un élément d'enregistrement des types (20a, 20b, 31) de longueur homogène est constitué, **en ce que** l'information sur le type enregistrée dans l'élément d'enregistrement du type comprend des informations de longueur concernant la longueur de l'opérande associé, et **en ce que** l'information sur la longueur est évaluée lors de chaque accès à la mémoire d'opérande, sachant que la longueur du type d'opérande concerné est enregistrée dans une table en fonction du code-type qui lui est associé.

9. Procédé selon la revendication 8, **caractérisé en ce que** les éléments de mémoire des types soient constitués sous forme d'une pile (20) distincte.

10. Procédé selon la revendication 8, **caractérisé en ce que** les éléments de mémoire des types (31) sont enregistrés en relation avec l'élément de la pile de la mémoire d'opérande (32).

11. Procédé selon une des revendications 8 à 10, **caractérisé en ce que**, lors de chaque accès lecture à la mémoire d'opérande (10, 32), un contrôle du type est effectué.
